# DEMANDE DE BREVET EUROPEEN

(11) **EP 1 494 140 A1**
(43) Date de publication de la demande: **05.01.2005**
(21) Numéro de dépôt: 04102668.3
(22) Date de dépôt: 11.06.2004
(51) Int. Cl.: G06F 17/30

(54) **Procédé et dispositif de diffusion de publications brevets sous forme électronique**

(30) Priorité: 01.07.2003 CH 115903
(71) Demandeur: Patents & Technology Surveys SA, 2001 Neuchâtel (CH)
(72) Inventeur: Saam, Christophe, 2000, Neuchâtel (CH); Cornu, Gilles, 2300, La Chaux-de-Fonds (CH); Zbinden, Rodrigue, 1718, Rechthalten (CH)

(57) **Abrégé**

Dispositif informatique pour stocker et distribuer des publications brevets sous forme électronique, comprenant :
un processeur et une mémoire comprenant une banque de données de publications brevets contrôlée par ledit processeur,
lesdites publications brevets étant organisées logiquement dans ladite banque de données de manière à constituer des familles de publications brevets,
des moyens logiques pour déterminer automatiquement à l'aide de plusieurs critères hiérarchiques la publication brevet la plus représentative d'une famille,
un serveur de communication connecté à ladite banque de données d'une part et à un réseau de télécommunications d'autre part, ledit serveur étant programmé de façon à recevoir des requêtes provenant d'une pluralité d'utilisateurs dudit réseau, à faire exécuter lesdites requêtes par ladite banque de données, et à retourner aux utilisateurs des résultats de requête sous la forme d'une liste de dites publications brevets les plus représentatives.

## Description

La présente invention concerne un procédé et un dispositif de diffusion de publications brevets sous forme électronique.

Parmi toutes les activités de veille technologique, les activités de recherche et de surveillance périodique figurent parmi celles qui ont connu le développement le plus important. Cela tient d'une part à une nécessité économique évidente, ainsi qu'au caractère structuré de l'information brevet qui permet d'effectuer des recherches fiables.

Il existe donc un grand nombre de banques de données de publications brevets accessibles au travers du web ou de réseaux de télécommunications propriétaires. A titre d'exemple non limitatif, citons les banques de données de Derwent, Delphion, Pluspat sur le serveur Questel-Orbit, les banques de données mises à disposition par des prestataires tels que STN, Dialog, Micropatent, Depatis, Espacenet, et bien d'autres.

Le nombre de publications brevets est toutefois très important, en sorte que les recherches effectuées au moyen de ces différentes banques de données tendent à fournir un nombre de résultats important. Il en résulte par conséquent des temps de transmission des résultats de recherche importants, ce qui renchérit les recherches et occupe le serveur hébergeant l'information, le canal de transmission, le terminal de l'utilisateur et finalement l'utilisateur lui-même pendant une durée excessive.

Ce problème a été partiellement limité grâce à l'augmentation des débits de transmission constatée ces dernières années. Cette augmentation de débit a toutefois été au moins partiellement annihilée par l'augmentation exponentielle du nombre de publications brevets chaque année, ainsi que par les besoins toujours croissants des utilisateurs.

La majorité des demandes de brevet sont déposées avec des modifications mineures dans plusieurs pays. Ainsi, une même invention fait souvent l'objet de plusieurs publications brevets très similaires dans différents Etats. Beaucoup d'offices de brevet publient par ailleurs chaque demande de brevet plusieurs fois, par exemple une fois après 18 mois, une seconde fois lors de la délivrance et éventuellement une troisième fois après la procédure d'opposition.

Certaines banques de données, telles que Espacenet, Pluspat ou Delphion par exemple, incluent chacune de ces publications comme enregistrement différent dans la banque de données. Les résultats de recherche retournés par des requêtes sont donc souvent très redondants et incluent plusieurs abrégés similaires ou identiques pour différentes publications de la même invention.

Afin de réduire les temps de transmissions évoqués, certains fournisseurs de banques de données sélectionnent un seul membre dans chaque famille et ne stockent par exemple que le numéro et la date de publication des autres membres de la famille. Par exemple, certaines banques de données stockent uniquement l'abrégé et les données bibliographiques de la publication aux Etats-Unis. Derwent stocke uniquement les informations concernant le premier membre de la famille publié découvert par Derwent. D'autres banques de données fusionnent les informations provenant de différentes publications pour la même invention et génèrent un « super-enregistrement » fusionné.

Bien que cette approche permette de réduire fortement la redondance des résultats et donc les temps de transmission, elle n'est pas entièrement satisfaisante. D'une part, une grande quantité d'information est perdue, notamment lorsque les abrégés des différents membres d'une même famille sont différents les uns des autres, ou lorsque les différentes publications contiennent des informations, par exemple des codes de publication, complémentaires. D'autre part, la publication sélectionnée n'est pas nécessairement la plus représentative de la famille. Par exemple, la première publication découverte, ou la publication aux Etats-Unis, n'est pas nécessairement la plus pertinente ni celle sur laquelle on dispose du plus grand nombre d'information ; d'autre part, il est souvent plus utile d'obtenir la publication correspondant au brevet délivré que celle correspondant à la demande.

Par ailleurs, dans un programme de veille technologique, retrouver un ensemble de documents à partir d'une banque de données n'est pas l'activité la plus coûteuse, ni celle qui prend le plus de temps, ni même la plus stratégique ; identifier les brevets vraiment importants parmi ceux qui ont été découverts, puis analyser leur statut légal et l'impact qu'ils peuvent avoir sur une activité commerciale donnée est au moins aussi critique. Ces différents services sont le plus souvent effectués par des agents en brevet ou d'autres spécialistes des brevets qui fournissent des résultats sous la forme de lettres, de rapports, de e-mails et de recommandations envoyés par différents canaux. Cette information supplémentaire, bien que directement liée aux différentes publications brevets retrouvées, est absente des banques de données de brevets consultées et le plus souvent dispersée dans différents documents papier ou électroniques. Il est donc difficile de regrouper puis de faire circuler cette information supplémentaire efficacement au sein d'une entreprise.

Les banques de données hébergées sur des hosts tels que Questel-Orbit, STN ou Dialog bénéficient d'un langage de recherche performant et flexible, mais difficile à apprendre. Les banques de données disponibles sur le web bénéficient souvent d'une interface graphique permettant de lancer des requêtes avec un minimum de connaissances préalables, mais qui ne permettent pas de sélectionner de manière très ciblée les résultats désirés. Il existe donc un besoin pour une interface graphique basée de préférence sur le web et qui permette de construire, avec un minimum de connaissances préalables, des requêtes complexes.

Selon l'invention, ces buts sont atteints au moyen d'un dispositif informatique et d'un procédé ayant les caractéristiques des revendications indépendantes de type correspondant, des variantes préférentielles étant indiquées dans les revendications dépendantes.

En particulier, ces buts sont atteints au moyen d'un dispositif informatique pour stocker et distribuer des publications brevets sous forme électronique, comprenant :
un processeur et une mémoire comprenant une banque de données de publications brevets contrôlée par ledit processeur,
lesdites publications brevets étant organisées logiquement dans ladite banque de données de manière à constituer des familles de publications brevets,
des moyens logiques pour déterminer automatiquement à l'aide de plusieurs critères hiérarchiques la publication brevet la plus représentative d'une famille,
un serveur de communication connecté à ladite banque de données d'une part et à un réseau de télécommunications d'autre part, ledit serveur étant programmé de façon à recevoir des requêtes provenant d'une pluralité d'utilisateurs dudit réseau, à faire exécuter lesdites requêtes par ladite banque de données, et à retourner aux utilisateurs des résultats de requête sous la forme d'une liste de publications brevets les plus représentatives.

Cette solution a l'avantage de réduire le volume de résultats transmis à une seule publication par famille, sans perdre trop d'information puisque cette publication est choisie intelligemment sur la base de plusieurs critères. Elle a donc un effet technique, puisque le temps de transmission de l'information pertinente est réduit. Par ailleurs, dans une variante préférentielle, l'information relative aux autres publications moins représentatives est stockée dans la banque de données et peut aussi être accédée à l'aide d'une opération supplémentaire.

La publication la plus représentative de chaque famille est obtenue dans une première variante en comparant successivement une série de critères d'importance décroissante hiérarchique.

Ces buts sont aussi atteints au moyen d'un dispositif informatique pour stocker et distribuer des publications brevets sous forme électronique, comprenant :
un processeur et une mémoire comprenant une banque de données de publications brevets contrôlée par ledit processeur,
un serveur de communication connecté à ladite banque de données d'une part et à un réseau de télécommunications d'autre part, ledit serveur étant programmé de façon à recevoir des requêtes provenant d'une pluralité d'utilisateurs dudit réseau, à faire exécuter lesdites requêtes par ladite banque de données, et à retourner aux utilisateurs des résultats de requête sous la forme d'une liste de publications brevets,
des moyens logiques de construction de requêtes constituées d'une liste d'expressions reliées logiquement au moyen d'opérateurs booléens, lesdits moyens logiques étant agencés pour proposer au dit utilisateur une liste d'intitulés de champs de recherche sélectionnables, puis un format d'expression variant selon l'intitulé de champ sélectionné.

Cette solution a l'avantage de permettre même à un utilisateur débutant de bâtir des requêtes complexes, puisque l'utilisateur doit uniquement choisir les champs de recherche qu'il souhaite consulter pour que le format de l'expression pouvant être introduit soit automatiquement déterminé. Par ailleurs, cette solution permet de bâtir avec un minimum de connaissances des requêtes complexes comprenant un nombre illimité d'expressions.

Enfin, ces buts sont aussi atteints au moyen d'un dispositif informatique pour stocker et distribuer des publications brevets sous forme électronique, comprenant :
un processeur et une mémoire comprenant une banque de données de publications brevets contrôlée par ledit processeur, ladite banque de données comprenant un enregistrement distinct pour chaque publication brevet et/ou famille de publication brevet, ledit enregistrement comprenant un champ pour des commentaires,
un serveur de communication connecté à ladite banque de données d'une part et à un réseau de télécommunications d'autre part, ledit serveur étant programmé de façon à recevoir des requêtes provenant d'une pluralité d'utilisateurs dudit réseau, à faire exécuter lesdites requêtes par ladite banque de données, et à retourner aux utilisateurs des résultats de requête sous la forme d'une liste de publications brevets,
ledit serveur étant agencé pour permettre audit utilisateur d'ajouter ses propres commentaires dans ledit champ commentaire et de visualiser lesdits commentaires.

Cette solution a l'avantage de permettre à un utilisateur ou à un agent en brevet d'ajouter des commentaires, y compris par exemple une analyse, un rapport, des copies de e-mails ou de lettres, etc, à une publication brevet stockée dans la banque de données. Il est ainsi possible de regrouper les commentaires de plusieurs utilisateurs dans la même banque de données, associés à chaque publication commentée. Ces commentaires peuvent ainsi être distribués plus rapidement et plus efficacement.

Dans une variante préférentielle, la visibilité des commentaires peut être limitée, ce qui signifie qu'un utilisateur peut introduire des commentaires qui resteront inaccessibles et mêmes invisibles pour d'autres utilisateurs non autorisés.

L'invention sera mieux comprise à la lecture de la description annexée, illustrée par les figures qui montrent :
La figure 1 un schéma bloc d'un réseau de télécommunications incluant un dispositif informatique selon l'invention.
La figure 2 un exemple de structure de banque de données selon l'invention.
La figure 3 un exemple de page web permettant à un utilisateur du réseau de télécommunication abonné au dispositif de l'invention de se connecter audit dispositif.
La figure 4 un exemple de page web permettant à un utilisateur du réseau de télécommunication abonné au dispositif de l'invention d'entrer une expression de recherche dans les titres.
La figure 5 un exemple de page web pour afficher à l'utilisateur la liste provisoire des expressions introduites au moyen du constructeur de requête.
La figure 6 un exemple de page web permettant à un utilisateur du réseau de télécommunication abonné au dispositif de l'invention d'entrer une expression de recherche parmi les documents pour lesquels aucune image PDF n'est disponible.
La figure 7 un exemple de page web pour afficher à l'utilisateur la liste des expressions introduites au moyen du constructeur de requête.
La figure 8 est un exemple de page web affichant des résultats de requête sous la forme d'une liste de publications brevets les plus représentatives.
La figure 9 est un exemple de page web affichant des résultats de requête incluant toutes les publications brevets correspondant à la requête.
La figure 10 est un exemple de page web montrant une vue détaillée d'une publication brevet incluant davantage d'informations disponibles au sujet de ces publications de brevet.
La figure 11 est un exemple de page web permettant à un utilisateur d'ajouter des commentaires à une publication brevet ou à une famille de publications brevets.

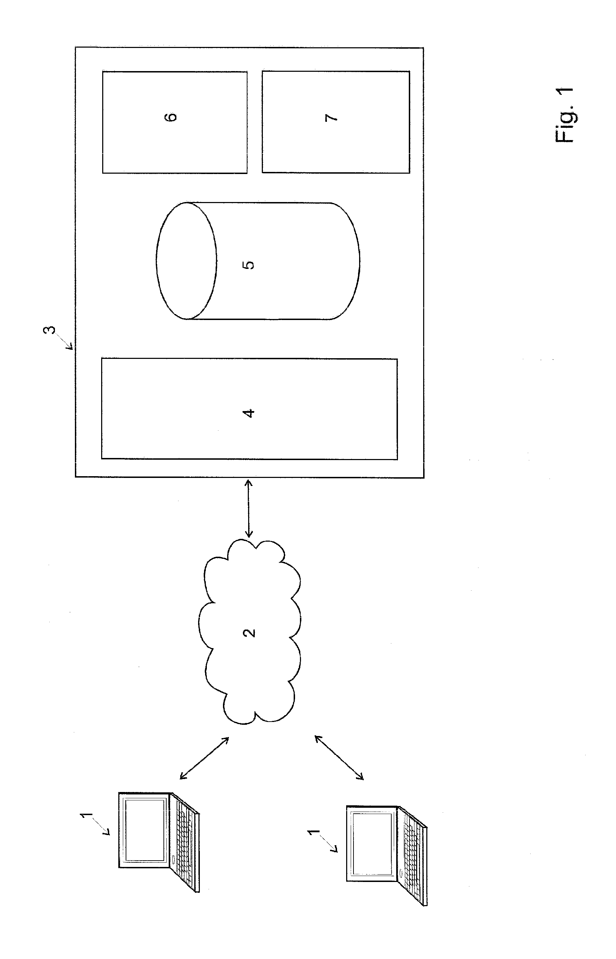

La figure 1 illustre un schéma-bloc d'un système de télécommunications incluant un dispositif informatique selon l'invention. Le système comporte un réseau de télécommunications 2, par exemple un réseau WAN (wide area network) ou LAN (local area network) de type internet ou téléphonique. Un dispositif informatique 3 est relié à ce réseau 2 au travers d'un serveur de communications 4, par exemple un serveur web de type http ou https et d'un routeur non représenté. Une pluralité d'utilisateurs 1 peuvent se connecter au dispositif informatique 3 au travers dudit réseau de télécommunication 2 pour rechercher et consulter des publications brevets. Le dispositif 3 peut par exemple être constitué par un ou plusieurs serveurs mutuellement connectés au travers d'un réseau LAN ou WAN.

Le dispositif informatique 3 comporte une banque de données 5, par exemple une banque de données Oracle™ ou SQLServer™ exécutée par un serveur de banque de données comportant un ou plusieurs processeurs 7 et une mémoire 7, dans laquelle la banque de données 5 peut aussi être enregistrée. La banque de données 5 contient des enregistrements correspondant à des publications brevets importées au moyen de modules d'importation flexibles à partir de banques de données externes. Les publications sont de préférence importées pour le compte d'abonnés qui ont accès à des sous-ensembles différents de publications brevets.

Le serveur de communication 4 est programmé, par exemple dans un environnement JAVA™ ou .NET™, de façon à recevoir des requêtes provenant des utilisateurs 1, à faire exécuter lesdites requêtes par la banque de données 5, et à retourner aux utilisateurs des résultats de requête sous la forme d'une liste de publications brevets. Les résultats de requête sont de préférence encryptés par SSL avant de transiter par le réseau 2.

Les différentes caractéristiques de l'invention visent notamment à réduire la quantité d'information circulant à travers le réseau de télécommunication 2, sans réduire la pertinence des informations transmises.

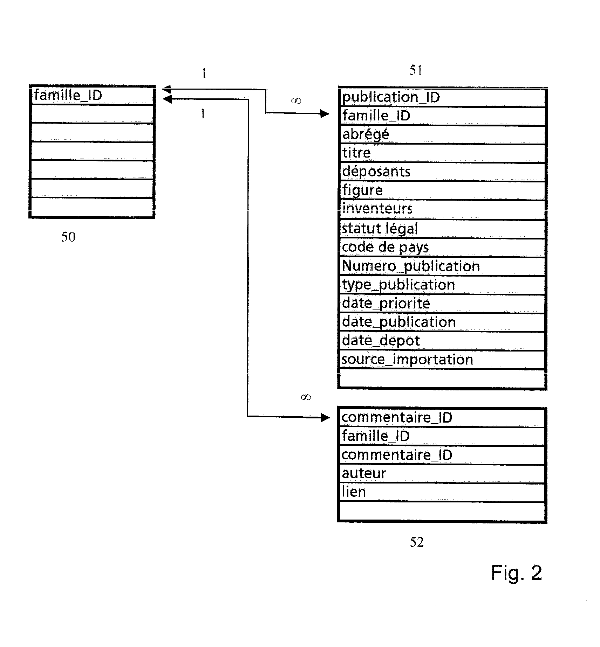

La figure 2 illustre un exemple possible de la structure partielle des enregistrements de publication brevet dans la banque de données 5. Dans cet exemple, les publications sont regroupées en familles dans une table de famille 50 incluant un enregistrement pour chaque famille de publications identifié par un champ d'indexation famille_ID. Une table de publications inclut un enregistrement pour chaque publication brevet identifié par un champ d'indexation publication_ID ; une relation vers la table de famille indique à quelle famille appartient chaque publication. Les enregistrements de publication incluent de préférence au moins les champs suivants :
- Abrégé du brevet
- Titre (du brevet)
- Figure du brevet
- Optionnellement, revendications du brevet
- Optionnellement, texte complet du brevet
- Déposant (ou lien vers une table de déposants)
- Inventeur (ou lien vers une table d'inventeurs)
- Optionnellement, statut légal du brevet
- Code de pays
- Numéro de publication
- Type de publication
- Date de priorité
- Date de publication
- Date de dépôt
- De préférence, source d'importation (c'est-à-dire fournisseur des données contenues dans l'enregistrement)
- Lien vers le document complet au format image (par exemple PDF)
- Références du dossier de l'utilisateur ou de l'agent en brevet.
- etc.

Une autre table de commentaires 52 inclut des commentaires concernant chaque publication ou, dans une variante, chaque famille de publications. Dans l'exemple illustré, les commentaires sont reliés aux familles de publication grâce à la relation multiple famille_lD. Les enregistrements de la table de commentaires 52 incluent de préférence au moins les champs suivants :
- Commentaire_ID (champ d'indexation de la table)
- Comment : champ texte ou binaire, ou lien vers un champ texte ou vers une page HTML par exemple, incluant le texte du commentaire ajouté.
- Auteur : nom de l'utilisateur qui a introduit le commentaire
- Date : date d'introduction du commentaire
- lien : lien vers un document relié au commentaire.

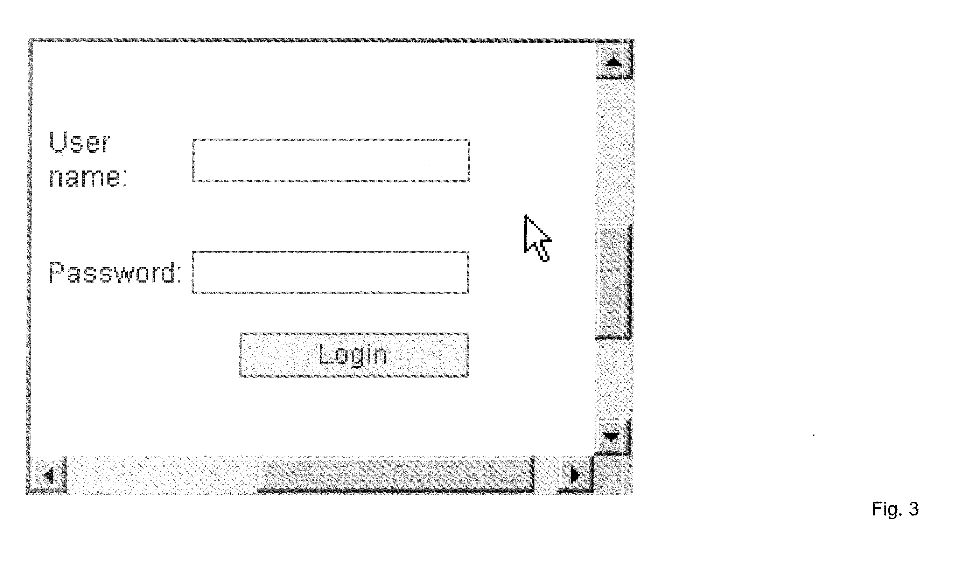

Lorsqu'un utilisateur se connecte au dispositif 3, le serveur de communication lui envoie une page web de demande d'authentification, par exemple la page illustrée sur la figure 3. L'utilisateur doit alors entrer son identifiant et un mot de passe, ou d'autres moyens d'identification forts, pour accéder aux publications brevets dans la banque de données 5.

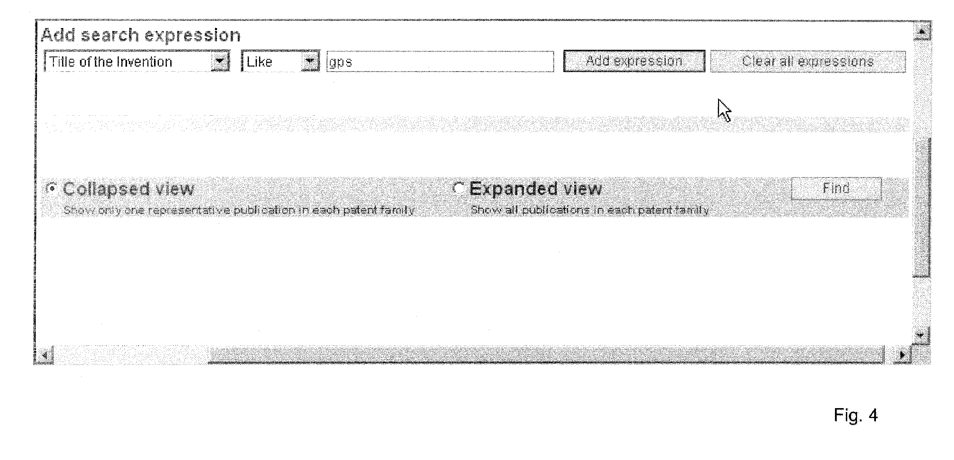

La figure 4 illustre un exemple de page web permettant à un utilisateur du réseau de télécommunication abonné au dispositif de l'invention d'entrer une expression de recherche parmi les titres de publications brevets dans la banque de données. Selon l'invention, les requêtes de recherche sont constituées d'une liste d'expressions logiques reliées par des opérateurs booléens ; le formulaire illustré permet de créer de nouvelles expressions et de les ajouter à la liste. Sur l'exemple, l'utilisateur a sélectionné l'intitulé « Title of the Invention » pour indiquer sa volonté d'effectuer une recherche parmi les titres d'invention. Le format de l'expression proposé est alors dynamiquement adapté en fonction de cet intitulé. Dans l'exemple, l'expression est composée d'un intitulé et de la valeur recherchée, ici « gps » reliés par l'opérateur « Like »

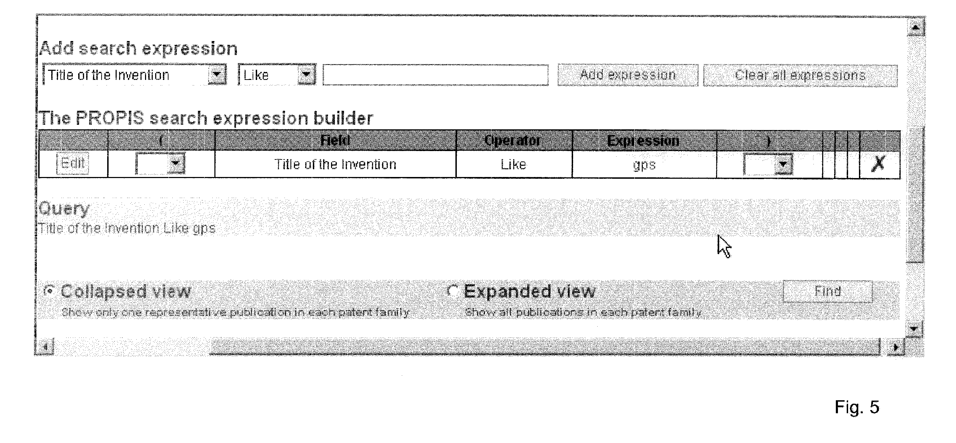

La figure 5 illustre un exemple de page web pour afficher à l'utilisateur la liste provisoire des expressions introduites au moyen du constructeur de requête. Cette page s'affiche lorsque l'utilisateur appuie sur le bouton « Add expression » sur l'écran de la figure 4. Sur cet exemple, la liste comporte uniquement l'expression « title of the Invention Like GPS ». Cette expression est résumée au-dessous du tableau affiché.

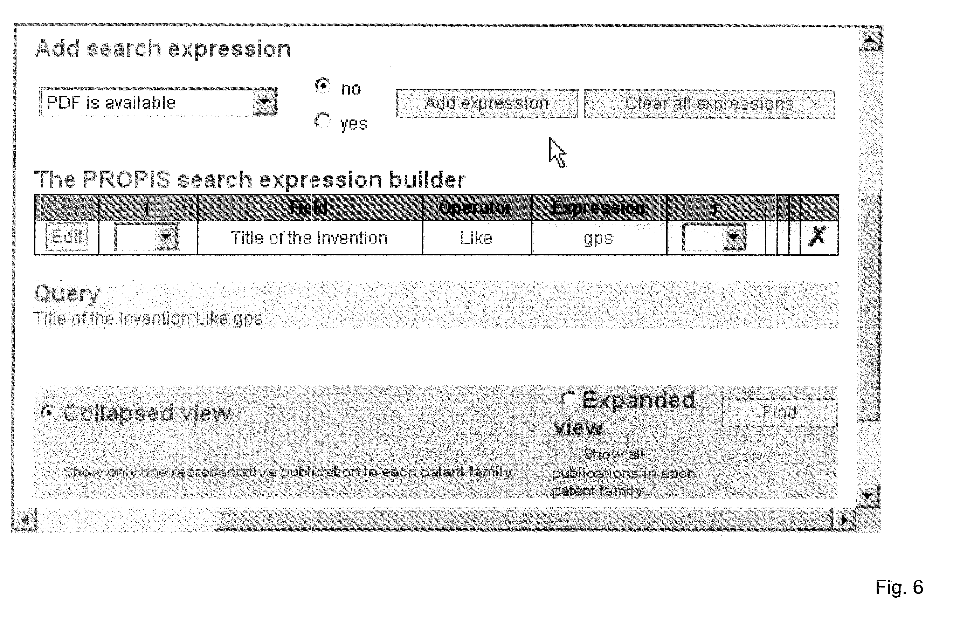

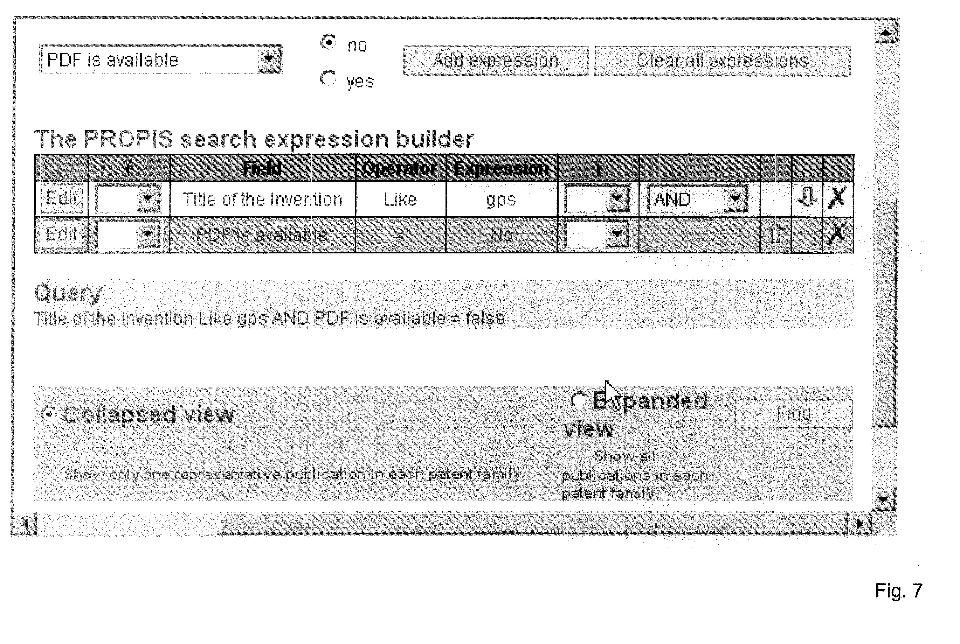

L'utilisateur peut compléter sa requête en ajoutant de nouvelles expressions, comme illustré sur les figures 5 et 6. Sur la figure 5, l'utilisateur a choisi un intitulé de champ booléen « PDF is available » ; le format de l'expression proposé est alors modifié pour permettre d'introduire les deux valeurs possibles « YES » et « NO » pour ce champ. La figure 7 illustre la liste d'expressions affichée après l'ajout de cette expression. Comme on le voit, l'utilisateur peut relier les différentes expressions d'une liste au moyen d'opérateurs booléens, par exemple « AND », « OR », « NOT », etc. Selon l'invention, des parenthèses peuvent en outre être introduites entre les expressions pour construire des requêtes plus complexes.

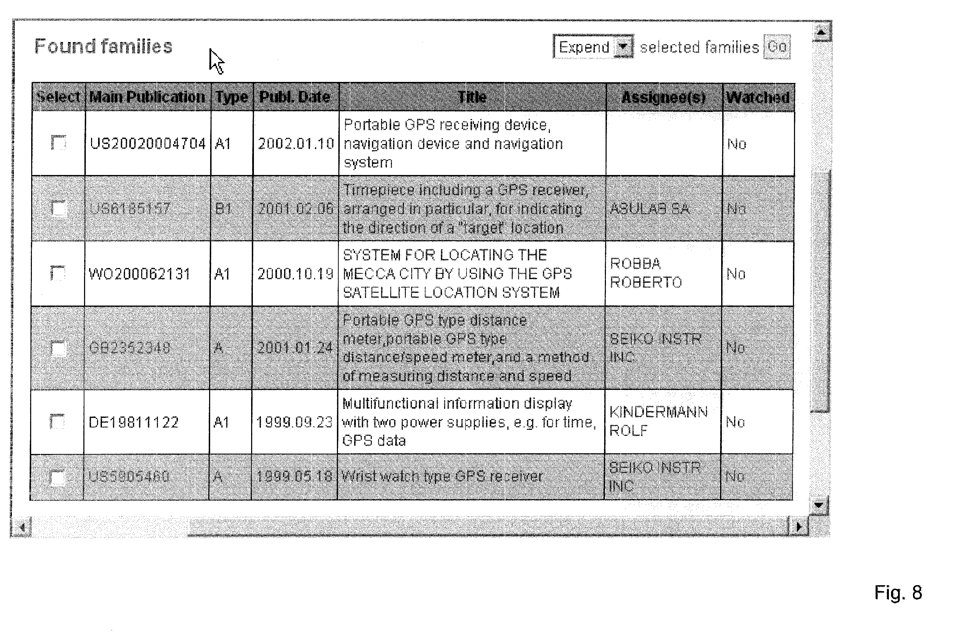

La figure 8 illustre un exemple de page web affichant des résultats de la requête sous la forme d'une liste de publications brevets les plus représentatives de chaque famille. Cette liste comprend uniquement les publications correspondant à la requête introduite et que l'utilisateur a le droit de visionner, dans le cas où des droits de visibilité différents sont associés aux différents documents. Une même requête exécutée par deux utilisateurs différents, notamment deux utilisateurs n'appartenant pas à un même groupe d'utilisateurs, peut donc produire une liste de résultats différente.

Selon l'invention, des moyens logiques constitués de préférence par un module informatique stocké dans la mémoire 5 et exécuté par le processeur 6 permettent de déterminer automatiquement, à l'aide de plusieurs critères hiérarchiques, la publication brevet la plus représentative de chaque famille dont au moins un membre répond à la requête introduite. Pour chaque famille retrouvée, seule cette publication la plus représentative est affichée sur la liste de la figure 8.

Il est important de noter que la publication brevet affichée ne répond pas nécessairement elle-même à la requête introduite ; il suffit qu'un membre de sa famille satisfasse à cette requête. La banque de données renvoie cependant le membre de la famille le plus représentatif, c'est-à-dire le plus susceptible d'intéresser l'utilisateur, en fonction de critères hiérarchiques prédéfinis.

Les critères hiérarchiques utilisés permettent notamment de s'assurer qu'un maximum d'information soit disponible dans la publication sélectionnée. Par exemple, une publication pour laquelle l'abrégé, le titre, au moins une figure, un document de brevet complet sous forme image (par exemple PDF), des commentaires, le statut légal sont disponibles, sera préférée à une publication équivalente pour laquelle une ou plusieurs de ces indications sont manquantes.

Si les publications dans la banque de données sont importées depuis plusieurs sources distinctes, les documents de sources considérées fiables, ou complètes, ou mieux classées/ mieux rédigées seront préférées à des publications équivalentes importées de sources de moins bonne qualité.

Si des publications équivalentes dans différents pays ont été importées, par exemple le même brevet en Europe et aux Etats-Unis, on préférera peut être un pays, ou un code de pays, plutôt qu'un autre. Si des publications différentes à différents stades d'un même pays ont été importées, on préférera un stade de publication à un autre. Par exemple, on préférera généralement un brevet délivré de type B en Europe à une demande publiée (type A).

Enfin, la date de priorité, de dépôt, de publication et/ou de délivrance peut aussi être prise en considération pour déterminer la publication brevet la plus représentative d'une famille.

D'autres critères, par exemple la longueur de l'abrégé, la qualité de la figure, la présence de revendications ou d'une description complète, le nombre de sélection par les utilisateurs, le temps de consultation, le nombre d'impressions, etc., peuvent aussi être utilisés pour déterminer la publication la plus représentative d'une famille. Les utilisateurs, ou l'administrateur système, peuvent aussi marquer une publication particulière dans une famille comme publication la plus représentative.

Ces différents critères sont de préférence hiérarchisés, c'est-à-dire que des priorités leurs sont associées. Les critères moins prioritaires sont utilisés uniquement en cas d'égalité pour les critères prioritaires.

Dans une variante, un coefficient de pertinence est associé à chaque publication, par exemple lors de son importation, pour déterminer sa représentativité. Ce coefficient est de préférence calculé comme une somme pondérée des différents critères mentionnés et peut éventuellement être recalculé suite à certains événements, par exemple lors de sélections. Cette variante a l'avantage d'accélérer la détermination de la publication la plus représentative.

De préférence, des critères différents, ou une hiérarchie différente, peuvent être définis pour différents utilisateurs 1. Cela permet par exemple à un utilisateur américain de donner la priorité à l'affichage de publications américaines, sans imposer ce choix à un utilisateur européen. Les critères hiérarchiques définis pour chaque utilisateur sont stockés dans un profil d'utilisateur dans la banque de données ou dans au moins un cookie dans le terminal des utilisateurs.

La liste de la figure 8 retournée en réponse à une requête contient ainsi une seule publication particulièrement pertinente et représentative par famille de brevet. Ces résultats de requête peuvent ainsi être générés, transmis, affichés puis analysés plus rapidement que les listes de publication de l'art antérieur, sans pour autant perdre beaucoup d'information.

La liste de la figure 8 est de préférence elle-même triée de manière à faire apparaître les publications appartenant aux familles les plus importantes en haut de la liste. Une famille est considérée importante si elle comporte beaucoup de membres, et si elle a fait l'objet de nombreux commentaires, et si ses membres ont été souvent cités dans d'autres familles. De même, la pertinence de la famille par rapport à la requête est de préférence utilisée comme critère de tri. Ainsi, une famille dont au moins une publication comprend plusieurs fois les mots clés de la requête, y compris dans le titre et dans les commentaires, sera considérée comme plus pertinente qu'une famille qui cite ces mots-clés une seule fois ans l'abrégé.

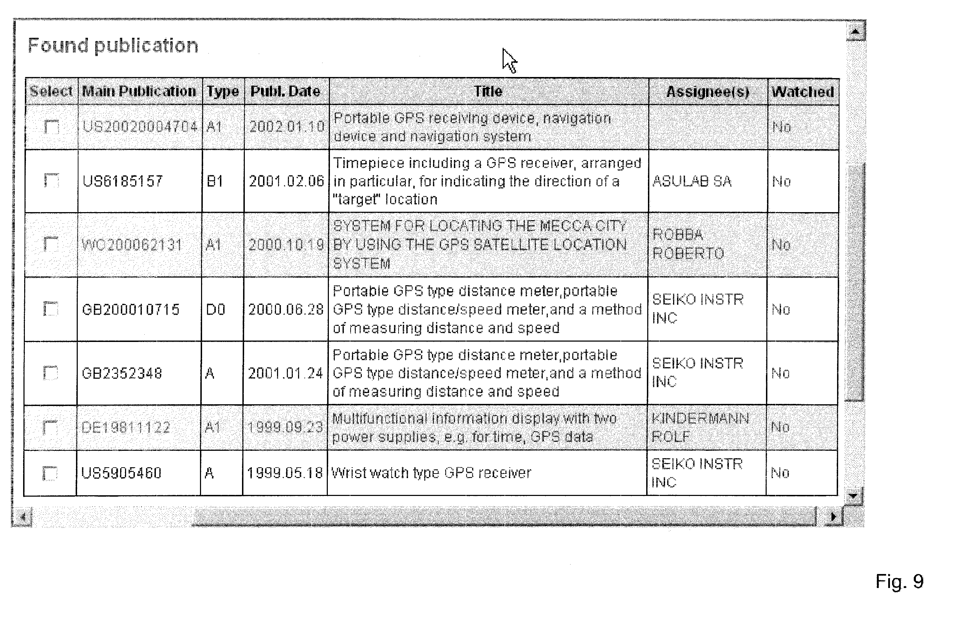

En sélectionnant une, plusieurs, ou toutes les familles de publications affichées sur la figure 8 et en cliquant sur la commande « expend selected families », l'utilisateur peut passer à la vue de la figure 9 qui montre un résumé de l'ensemble des publications de chaque famille. Dans cet exemple, les différentes publications de chaque famille sont regroupées par bandes de couleur. On voit ainsi que la famille illustrée par le membre GB-A-2353348 sur la figure 8 comporte un autre membre GB200010715 sur la figure 9. La liste de la figure 9 est donc moins compacte que la liste de la figure 8, mais contient davantage d'information.

En cliquant sur une publication particulière à partir de la liste de l'une des figures 8 ou 9, l'utilisateur peut afficher une page de détail incluant davantage de détails sur chaque publication. Les champs supplémentaires affichés incluent notamment l'abrégé, la liste des inventeurs et des déposants, le lien vers un document PDF éventuellement disponible, une figure éventuelle, ainsi que la liste de tous les membres de la famille. Dans une variante préférentielle non illustrée, cette liste inclut de préférence au moins certaines des indications suivantes :
- présence d'un document de brevet complet sous forme image
- présence d'une figure,
- présence de commentaires
- source d'importation des données
- date de publication.

L'utilisateur peut cliquer sur un des membres de famille indiqués dans la liste pour accéder directement à la publication correspondante.

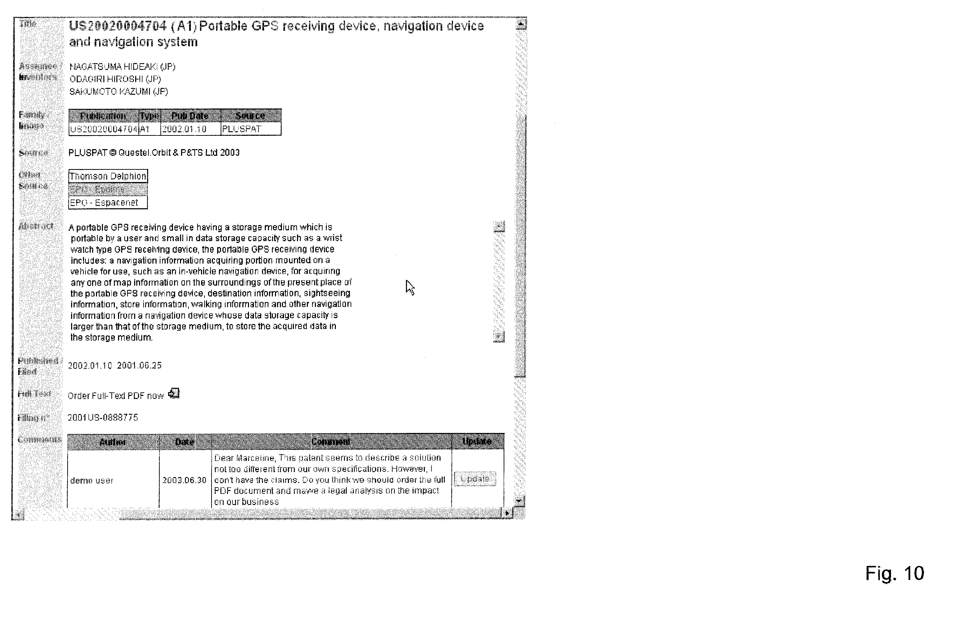

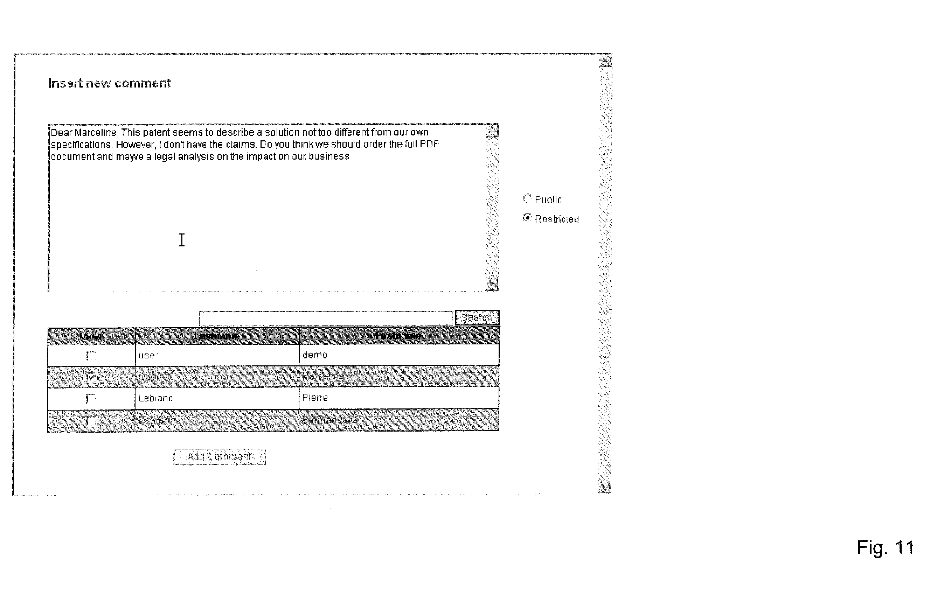

Les utilisateurs ont la possibilité d'introduire des commentaires associés à chaque publication et/ou à chaque famille de publication. Sur la figure 10, un commentaire a été introduit le 30.06.2003 par l'utilisateur « demo user » et concernant la pertinence de cette publication pour sa société. La figure 11 illustre une page web permettant d'introduire ces commentaires.

Selon l'invention, les utilisateurs sont groupés en groupes d'utilisateurs ; un groupe peut par exemple correspondre à des utilisateurs au sein d'une entreprise, d'un département, ou de n'importe quelle autre communauté arbitraire d'utilisateurs. Chaque groupe d'utilisateurs a accès à un sous-ensemble de publications brevets dans la banque de données 5 ; toutefois, certaines publications brevets peuvent être visibles par des utilisateurs de différents groupes, par exemple des groupes ayant commandé une recherche similaire.

Les commentaires sont parfois de nature confidentielle; certains utilisateurs peuvent être amenés à introduire dans des commentaires des remarques quant à l'impact possible d'un brevet sur leurs activités commerciales. Selon l'invention, les commentaires sont cependant visibles uniquement par les utilisateurs appartenant au même groupe d'utilisateurs que l'auteur du commentaire. En outre, comme illustré sur la figure 11, les utilisateurs peuvent choisir de restreindre la visibilité de ces commentaires à des utilisateurs indiqués nommément.

Par ailleurs, des documents, par exemple des documents au format .pdf, .doc, .xls, etc peuvent être insérés dans ou liés aux commentaires introduits. Les commentaires introduits sont de préférence sécurisés par SSL lors de leur transmission au travers dudit réseau de télécommunication.

Lors de l'introduction de nouveaux commentaires, ou lors de l'importation ou de la mise à jour de publications brevets dans la banque de données, des e-mails de notification sont de préférence générés automatiquement par la banque de données et envoyées aux membres des groupes d'utilisateurs concernés.

## Revendications

1. Dispositif informatique pour stocker et distribuer des publications brevets sous forme électronique, comprenant :
un processeur et une mémoire comprenant une banque de données de publications brevets contrôlée par ledit processeur,
lesdites publications brevets étant organisées logiquement dans ladite banque de données de manière à constituer des familles de publications brevets,
des moyens logiques pour déterminer automatiquement à l'aide de plusieurs critères hiérarchiques la publication brevet la plus représentative d'une famille,
un serveur de communication connecté à ladite banque de données d'une part et à un réseau de télécommunications d'autre part, ledit serveur étant programmé de façon à recevoir des requêtes provenant d'une pluralité d'utilisateurs dudit réseau, à faire exécuter lesdites requêtes par ladite banque de données, et à retourner aux utilisateurs des résultats de requête sous la forme d'une liste de dites publications brevets les plus représentatives.

2. Dispositif informatique selon la revendication 1, lesdits critères hiérarchiques incluant au moins deux critères parmi les critères suivants :
présence d'un abrégé,
présence d'une figure,
présence d'un document de brevet complet sous forme image,
présence de commentaires éventuels concernant la publication,
présence du statut légal,
code de pays de la publication,
type de publication, et/ou
date de priorité, de publication ou de dépôt,
source d'importation des publications de brevet dans ladite banque de données.

3. Dispositif informatique selon l'une des revendications 1 à 2, lesdits critères hiérarchiques et/ou les priorités associées auxdits critères hiérarchiques étant définis indépendamment pour chaque utilisateur dans un profil d'utilisateur.

4. Dispositif informatique selon l'une des revendications 1 à 3, dans lequel :
ladite banque de données comprend un enregistrement distinct pour chaque publication brevet et/ou famille de publication brevet, ledit enregistrement comprenant un champ pour des commentaires,
ledit serveur de communication étant agencé pour permettre audit utilisateur d'ajouter ses propres commentaires dans ledit champ commentaire et de visualiser lesdits commentaires.

5. Dispositif informatique pour stocker et distribuer des publications brevets sous forme électronique, comprenant :
un processeur et une mémoire comprenant une banque de données de publications brevets contrôlée par ledit processeur, ladite banque de données comprenant un enregistrement distinct pour chaque publication brevet et/ou famille de publication brevet, ledit enregistrement comprenant un champ pour des commentaires,
un serveur de communication connecté à ladite banque de données d'une part et à un réseau de télécommunications d'autre part, ledit serveur étant programmé de façon à recevoir des requêtes provenant d'une pluralité d'utilisateurs dudit réseau, à faire exécuter lesdites requêtes par ladite banque de données, et à retourner aux utilisateurs des résultats de requête sous la forme d'une liste de publications brevets,
ledit serveur étant agencé pour permettre audit utilisateur d'ajouter ses propres commentaires dans ledit champ commentaire et de visualiser lesdits commentaires.

6. Dispositif informatique selon la revendication 5, ledit enregistrement comportant un champ pour un lien vers des documents associés auxdits commentaires, ledit serveur étant agencé pour permettre audit utilisateur de visualiser lesdits documents.

7. Dispositif informatique selon l'une des revendications 5 ou 6, lesdits utilisateurs étant répartis en groupes d'utilisateurs, chaque groupe d'utilisateurs ayant accès uniquement à un sous-ensemble des publications brevets de ladite banque de données, les commentaires associés à une publication par un utilisateur membre d'un groupe étant visibles par les utilisateurs uniquement si ces utilisateurs sont membres dudit groupe.

8. Dispositif informatique selon l'une des revendications 5 à 7, lesdits utilisateurs ajoutant des commentaires ayant la possibilité de restreindre la visibilité de ces commentaires à des utilisateurs ou à des groupes d'utilisateurs sélectionnés manuellement par ces utilisateurs.

9. Procédé pour stocker et distribuer au travers d'un réseau de télécommunications des publications brevets sous forme électronique à une pluralité d'utilisateurs dudit réseau, comprenant les étapes suivantes :
les publications brevets sont importées dans une banque de données de publications brevets et organisées logiquement de manière à constituer des familles de publications de brevet,
un utilisateur envoie une requête à ladite banque de données au travers dudit réseau de télécommunications,
ladite requête est exécutée par ladite banque de données,
ladite banque de données détermine pour chaque publication brevet correspondant à ladite requête la publication brevet la plus représentative de la famille de cette publication brevet déterminée à l'aide de plusieurs critères hiérarchiques,
une liste desdites publications brevets les plus représentatives de chaque famille est retournée audit utilisateur.

10. Procédé pour stocker et distribuer au travers d'un réseau de télécommunications des publications brevets sous forme électronique à une pluralité d'utilisateurs dudit réseau, comprenant les étapes suivantes :
les publications brevets sont importées dans une banque de données de publications brevets,
ladite banque de données est rendue accessible à une pluralité d'utilisateurs au travers d'un réseau de télécommunications,
au moins un utilisateur introduit des commentaires relatifs à une publication brevet dans ladite banque de données.

11. Procédé selon la revendication 10, comprenant une étape de génération automatique de e-mail de notification à au moins certains utilisateurs lorsqu'un commentaire a été ajouté à une publication.
